# EUROPEAN PATENT SPECIFICATION

(11) **EP 3 356 793 B1**
(45) Date of publication and mention of the grant of the patent: **08.12.2021**
(21) Application number: 16775065.2
(22) Date of filing: 16.09.2016
(51) Int. Cl.: G01N 15/14, G01N 15/02, G01N 21/53, G01N 1/22

(54) **OPTICAL PARTICLE COUNTER**
OPTISCHE PARTIKELZÄHLER
COMPTEUR OPTIQUE DE PARTICULES

(30) Priority: 30.09.2015 US 201562235190 P
(43) Date of publication of application: 08.08.2018
(73) Proprietor: Sensirion AG, 8712 Stäfa (CH)
(72) Inventor: LU, Dengjun, 8712 Stäfa (CH); SINGH, Baljot, 8712 Stäfa (CH); TALWAR, Deepak, 8712 Stäfa (CH); MICALIZZI, Paolo, 8712 Stäfa (CH); SHI, Yuchen, 8712 Stäfa (CH); KOSTNER, Stefan, 8712 Stäfa (CH)
(74) Representative: Meyer, Michael Josef
(86) International application number: PCT/CH2016/000120
(87) International publication number: WO 2017/054098

(56) References cited:
- EP-A2- 1 158 292
- WO-A1-2005/001436
- WO-A1-2015/108511
- CN-B- 102 262 071
- KR-A- 20150 070 004
- US-A1- 2002 105 739
- US-A1- 2015 153 275
- JONATHAN E THOMPSON ET AL: "A fixed frequency aerosol albedometer", OPTIC EXPRESS, vol. 16, no. 3, 4 February 2008 (2008-02-04), pages 2191-2205, XP055329848, DOI: 10.1364/OE.16.002191

## Description

### Cross References to Related Applications

This application claims the priority of US provisional patent application 62/235,190, filed September 30, 2015.

### Technical Field

This invention relates to particulate matter (PM) sensors, and in particular to optical particle counters, which measure the concentration of micron-sized particulate matter in the atmosphere by means of light scattering techniques.

### Background Art

PM is a physical pollutant that consists of microscopic solid or liquid particles suspended in the air. For example, PM2.5 generally refers to particles with a diameter that is less than 2.5 µm, and PM10 generally refers to particles with a diameter that is less than 10 µm. These particles are particularly harmful to humans as they can permeate through the respiratory system's filters and diffuse into the bloodstream, giving rise to respiratory and cardiac problems.

A common way to determine a PM concentration is by means of optical particle counters (OPCs). Typically, OPCs consist of a fan or a pump that creates pressure difference, which allows it to collect a well-defined volume of air. The sample of the collected air is shaped by means of high-precision nozzles and clean air sheets, and is passed through a laser beam. The laser beam is focused and shaped by a series of lenses and optical elements. Particles suspended in the aerosol sample scatter light when hit by the laser beam. The light scattered by the particles hits a photo-detector that converts the scattered light into an electrical signal. By analyzing the signal, the number concentration and the size distribution of the particles are obtained. Lenses, mirrors, or other light collection techniques are used to bring the maximum amount of scattered light into the detector, in order to detect very small particles that can be down to tenths of a micron in diameter.

The traditional OPC systems are expensive and bulky because of, among others, the high cost of some of the optical components, the labor-intensive processes of aligning and calibrating all the elements, and the big size of the various assemblies.

CN102262071 (A) discloses an in-situ measurement device and a measurement method of a scattering coefficient spectrum of an atmospheric aerosol. The measurement device comprises an integrating sphere, a solar simulator, a fiber spectrometer and a computer, wherein an internal reflectance coating of the integrating sphere is made from polytetrafluoroethylene, and collection efficiency of the scattered light is improved based on the advantage of truncated corners of the internal reflectance coating, so that the sensitivity in the measurement of the scattering coefficient spectrum is effectively strengthened.

WO2005001436 (A1) describes an improved method and apparatus for the analysis of fluid borne particles and which is especially suitable for the detection of airborne biological particles.

EP1158292 (A2) discloses an aerosol hazard classification and early warning network which is composed of a large number of detector and analysis units, which are deployed throughout a region to be warned of a potentially hazardous aerosol intrusion.

US2015153275 (A1) discloses a portable apparatus for estimating air quality. The portable apparatus includes a light source unit suitable for emitting incident light having a predetermined wavelength toward air to generate scattered light which is reflected by particles in the air, a light detection unit suitable for collecting information on the scattered light, and an arithmetic unit suitable for analyzing the information on the scattered light which is collected by the light detection unit.

US2002105739 (A1) disclose an miniature integrating sphere which has a spherical volume with walls of a material for reflecting light, a light inlet and a light outlet. The light inlet is offset from a diameter axis of the spherical volume and the light inlet and light outlet are offset at non-perpendicular and non-parallel relation to each other.

WO2015108511 (A1) discloses various methods and apparatuses for detecting particulate matter.

In the document by Jonathan E. Thompson, Nick Barta, Danielle Policarpio, and Rick DuVall, "A fixed frequency aerosol albedometer," Opt. Express 16, 2191-2205 (2008), a new method for the measurement of aerosol single scatter albedo (*ω*) at 532 nm is disclosed. The method employs cavity ringdown spectroscopy (CRDS) for measurement of aerosol extinction coefficient (*bₑₓₜ*) and an integrating sphere nephelometer for determination of aerosol scattering coefficient (bscat) .

KR20150070004 (A) discloses a biosensor, which can measure a germ concentration in the indoor air through a light sensing method, which senses ultraviolet rays scattered by floating germs.

### Disclosure of the Invention

Hence, it is a general object of the invention to provide an optical particle counter and usages thereof that overcome the above disadvantages.

According to the present invention, as defined by claim 1, an optical particle counter is provided including a light source, an integrating sphere, a light stop, a photo-detector, a channel for air inlet, and a channel for air outlet. The light source is arranged to focus the light beam in the center of the integrating sphere. The light stop is arranged to stop the light beam after exiting the integrating sphere. The channels for air inlet and outlet are configured to allow an aerosol sample to enter the integrating sphere, cross the light beam, and exit. The photo-detector is arranged to collect light scattered by particles suspended in the aerosol sample when hit by the light beam and to convert the scattered light into an electrical signal. The optical particle counter is configured to deduce PM concentration in the air and includes a heater. The heater is arranged to exert a convection force on the aerosol sample entering the integrating sphere and hence supporting its transit through the integrating sphere. The optical particle counter includes ports allowing the aerosol sample to enter the integrating sphere, wherein the heater is placed in front of one of the ports.

Not necessarily all of the aerosol sample needs to be hit by the light beam. A portion thereof may only be hit while such measurement still provides valid results, e.g. via a calibration, for example, that maps the measurement results to the full aerosol sample.

In an embodiment, the optical particle counter comprises a housing, especially including injection molded housing portions, preferably, including, and even more preferably consisting of two halves. It is preferred that the housing includes a single piece base portion, preferably injection molded, and a single piece cover portion, preferably injection molded. Base and cover portion may finally be attached to each other, e.g. by means of an adhesive or by one or more of clamping, gluing, screwing, etc. In one embodiment, a lid may be attached to each injection molded portion each, which lid not necessarily is injection molded, or, may, in a different embodiment be integrated and injection molded. It is preferred that the housing has the channel for air inlet and the channel for air outlet integrated in, as well as various receptables for components to be inserted into the corresponding receptacles. In case the housing comprises two injection molded halves, it is preferred that each receptacle is formed by two recesses, one in the base portion, the other one in the cover portion, which, in response to attaching the halves to each other form the receptacle into which, prior to attaching, the subject component is arranged in. Preferably, the channels are build symmetrically in the two halves by means of recesses. Preferably, the recesses of a common receptacle or channel are symmetric to each other.

These embodiments not only enable an easy manufacturing process, but also promote for a small scale OPC, since the housing can fully be packed by inserting components into the corresponding receptacles. The injection molded portions of the housing are preferably designed such that the footprint of the housing is best used: Hence, walls inside the housing define the various channels and receptacles acting as holders for the various components. Some functions even may be performed by the housing walls themselves, such as the integrating sphere, or the light stop, for example.

Preferably, the base portion and the cover portion represent symmetric halves, in one embodiment except for a wall representing the light stop, and / or a wall a heater is attached to.

The integrating sphere preferably is formed by the housing, i.e. by the injection molded housing itself, and hence resides inside the housing. The integrating sphere hence is fromed and shaped by inner walls of the housing defined by the injection mold. In the event of two halves contributing to the housing, it is preferred that the base portion defines a hemisphere of the integrating sphere, and the cover portion defines the other hemisphere of the integrating sphere.

A surface of both of the hemispheres preferably is covered by a diffuse reflective coating in order to reflect light scattered by particles in the sphere to make them finally reach the photo-collector to be collected there.

In case the compenents to be embedded in such housing are minimized in number, a small size can be achieved for such optical particle counter. In one embodiment, a radius of the integrated sphere is 1 cm or less. For example, the OPC can achieve of a dimension of 80 mm in lenght, or less, of 40 mm in width, or less of 30 mm height, or less. In particular, lenses and / or mirrors and / or filters are avoided such that optical particle counter is free from such components. Only, the light source, which is preferably is a housed component itself, may contain, in its housing, one or more optical elements which allow for an integration close to the light source, which, for example, may be a laser unit or an LED unit. Specifically, the integrated sphere is free from any aperture and / or tubes and / or nozzles inside.

In a preferred embodiment, the portion of the channel for air inlet into the integrating sphere is designed tapered towards the integrating sphere. The tapering forms a defined aerosol stream into the integrating sphere such that any further stream shaping means are obsolete. The tapered section of the channel for air inlet preferably is oriented orthogonal to a remaining section of the channel for air inlet which promotes a compact size of the OPC. Preferably, the optical particle counter is embodied free from means for shaping the aerosol sample stream into the integrating sphere other than the tapering. In particular, the optical particle counter is free from means for providing a sheath flow.

In a preferred embodiment of the invention, the housing is black except for any reflecting coating. Hence, the housing absorbs any incoming light to a large extent. The channels which are also referred to as ports, or include ports, preferably are arranged not to allow a direct impact of sunlight / light into the integrating sphere.

In one embodiment, either independent from the housing being an injection molded housing, or, in connection with an injection molded housing, the photo-detector - which preferably is a single photo-diode - preferably is arranged at a location in the integrating sphere with a distance to the channel for air inlet smaller than to the channel for air outlet. Preferably, the photo-detector is arranged close to the inlet port, which arrangement is beneficial in order to avoid contamination of the photo-detector by the aerosol stream, and preferably closer to the inlet port than to the outlet port. The aerosol stream rather is directed at the opposite half of the sphere, whereas close to the inlet port only few particles may settle given that the inlet port, possibly supported by the tapered shape, is a location that does not promote such settling. Preferably, the location of the photo-detector is arranged within an angle of 45° or less relative to an axis defined as line from a center of the integrating sphere to an inlet hole of the channel of air inlet into the integrating sphere. A location of the photo-detector in the middle of the integrating sphere, as suggested in some of the embodiments illustrated in the Figures shall solely represent a symbolic arrangement at some location of the integrating sphere.

In a preferred embodiment, one or more of the channel for air inlet and the channel for air outlet is arranged to cool the light source by air passing the respective channel. The light source may selfheat. In case the channel is designed such that air passed through also circulates around the light source, or passes by a wall that separates the channel from the light source and shows a thermal coefficient sufficient to allow a cooling of the light source, the the light source may be cooled at the same time.

In a different embodiment, in addition or alternative to the light source, air or an aerosol stream in one of the input or output channel may be used to cool the light stop. The light stop preferably converts optical energy in thermal energy, e.g. by a suitable surface, such as a saw-tooth surface. Again, the subject channel preferably is designed such that air passed through also circulates around the light stop, or passes by a wall that defines the light stop and shows a thermal coefficient sufficient to allow a cooling of the light stop, the the light stop may be cooled at the same time.

Preferably, one or more apertures may be provided in form of individual components to be inserted into the housing, wherein the one or more apertures are arranged to being passed by the light beam before entering the integrating sphere, and preferably wherein the one or more apertures are configured to remove stray light from the light module.

According to another aspect of the present invention, different uses of embodiments of the OPC are suggested: In one embodiment, the OPC may be used in a stand-alone mode or for communicating wirelessly to other devices, in particular to smartphones. The OPC may be used in one of air conditioning units, air purifiers, transportation vehicles, Internet of Things sensor nodes, mobile handsets, or wearable devices.

The device embodiments show a signal response highly consistent with complex and expensive OPCs, while maintaining small dimensions, low power requirements, and low component and production costs. Thanks to these characteristics, the device embodiments can be used as personal monitors that allow individuals to measure their exposure to PM. The device embodiments can also be embedded in a wide range of products and systems, including but not limited to air conditioning units, air purifiers, transportation vehicles, Internet of Things (IoT) sensor nodes, mobile handsets, and wearable devices. The device embodiments can log air quality data in a stand-alone mode or communicate it wirelessly to other devices such as smartphones and/or any other suitable devices. The air quality data may be coupled with information about the measurement's location to create a dense air quality map.

### Brief Description of the Drawings

Various objects, features, and advantages of the disclosed examples can be better appreciated with reference to the following detailed description of the disclosed subject matter when considered in connection with the following drawings, in which like reference numerals identify like elements.
FIG. 1 illustrates an OPC in accordance with an embodiment not covered by the claimed invention.
FIG. 2 illustrates the operation of an OPC during detection of a particle at different times in accordance with an embodiment not covered by the claimed invention.
FIG. 3 illustrates an OPC in accordance with an embodiment not covered by the claimed invention.
FIG. 4 illustrates the operation of an OPC during detection of a particle at different times in accordance with an embodiment not covered by the claimed invention.
FIG. 5 illustrates an OPC in accordance with an embodiment of the invention.
FIG. 6 illustrates the operation of an OPC during detection of particles at different PM concentration environments in accordance with an embodiment of the invention.
FIG. 7 illustrates a flow chart of the signal processing of an OPC in accordance with an embodiment of the invention.
FIG. 8 illustrates a three-dimensional (3D) computer-aided design (CAD) model of an OPC in accordance with an embodiment not covered by the claimed invention, representing at the same time an OPC in accordance with an embodiment not covered by the claimed invention.
FIG. 9 illustrates an exploded view of FIG. 8 in accordance with an embodiment not covered by the claimed invention.
FIG. 10 illustrates a 3D CAD model of an OPC in accordance with an embodiment of the invention, representing at the same time an OPC in accordance with an embodiment of the present invention.
FIG. 11 illustrates a 3D CAD model of an OPC in accordance with an embodiment of the invention, representing at the same time an OPC in accordance with an embodiment of the present invention.
FIG. 12 illustrates an exploded view of FIG. 11 in accordance with an embodiment of the invention.
FIG. 13 illustrates an exploded view of an OPC in accordance with an embodiment of the invention.

### Detailed Description of the Drawings

In order to provide a thorough understanding of the disclosed subject matter, numerous specific details are set forth regarding the systems, methods and media of the disclosed subject matter and the environment in which such systems, methods and media may operate. It will be understood that the examples provided below are exemplary, and that the scope of the invention is defined by the claims.

The sensing techniques described in this section provide simple and effective ways to collect and analyze light scattered by microscopic particles to deduce PM concentration in the air. These sensing techniques allow the creation of device embodiments which are cost effective and small in size. In particular, the size of the embodiments can be scaled down to the millimeter cube domain or any other suitable size.

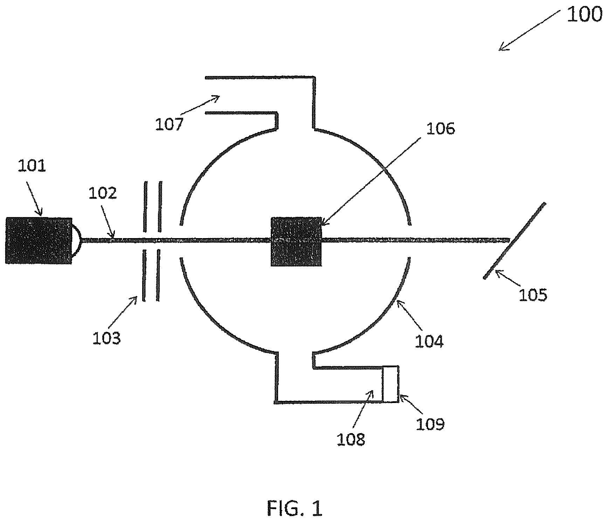

FIG. 1 illustrates an OPC 100 in accordance with an embodiment not covered by the claimed invention. The OPC 100 includes a laser module 101 containing optics to shape a laser beam 102, one or more apertures 103, an integrating sphere 104, a light stop 105, a photo-detector 106, a channel for air inlet 107, a channel for air outlet 108, and a fan or a blower 109. Although FIG. 1 includes nine components, one or more components can be separated into more components, combined into fewer components, rearranged, changed, added, and/or removed. In some embodiments, the laser module 101 can be replaced with other suitable light sources. As a non-limiting example, the laser module 501 can be replaced with a light-emitting diode (LED) module, and the laser beam 102 can be replaced with an LED beam. In some embodiments, the integrating sphere 104 can be modified with a non-spherical shape for easiness of production in the small size range and to provide a better streamlined path for the particles to move through.

In FIG. 1, the laser module 101 focuses the laser beam 102 in the center of the integrating sphere 104. Before entering the integrating sphere, the laser beam 102 passes through one or more apertures 103 that can remove stray light from the laser module 101. After exiting the integrating sphere 104, the laser beam is stopped by the light stop 105. The channels for air inlet 107 and outlet 108 allow an aerosol sample to enter the integrating sphere 104, cross the laser beam 102 and exit. The fan or blower 109 forces the aerosol sample through the channels at a constant rate. The design of the channels 107 and 108 does not allow ambient light to enter the sphere 104. The photo-detector 106, which is a light-to-voltage converter or any other suitable component or components, can be located at one output port of the integrating sphere or any other suitable locations. When no aerosol sample is flowing through the OPC 100, no light (or a minimum amount) from the laser module 101 is hitting the walls of the integrating sphere 104 or the photo-detector 106.

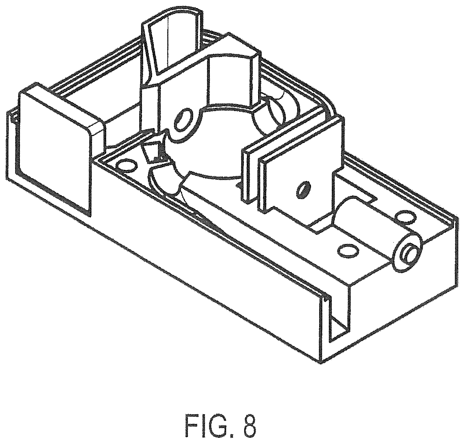

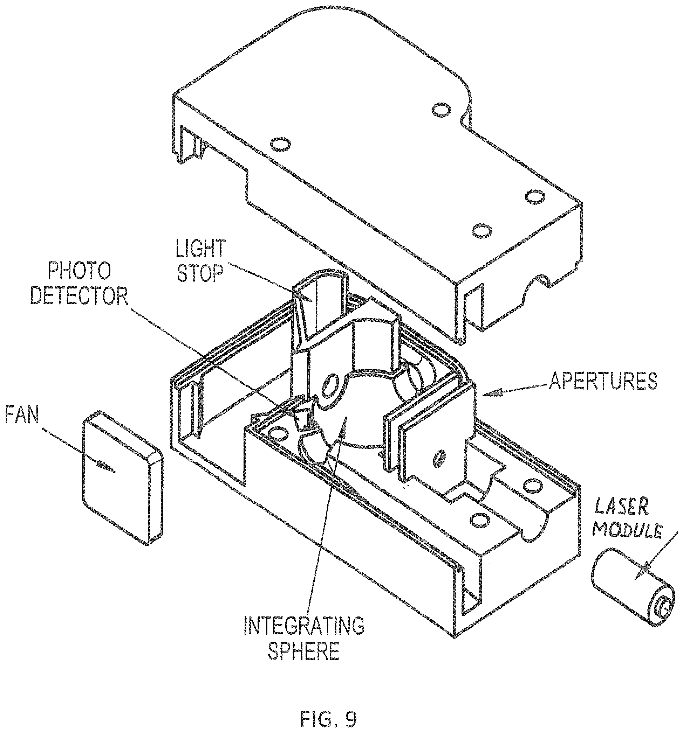

FIG. 8 illustrates a 3D CAD model of the OPC 100 in accordance with an embodiment not covered by the claimed invention. FIG. 9 illustrates an exploded view of FIG. 8 in accordance with an embodiment not covered by the claimed invention.

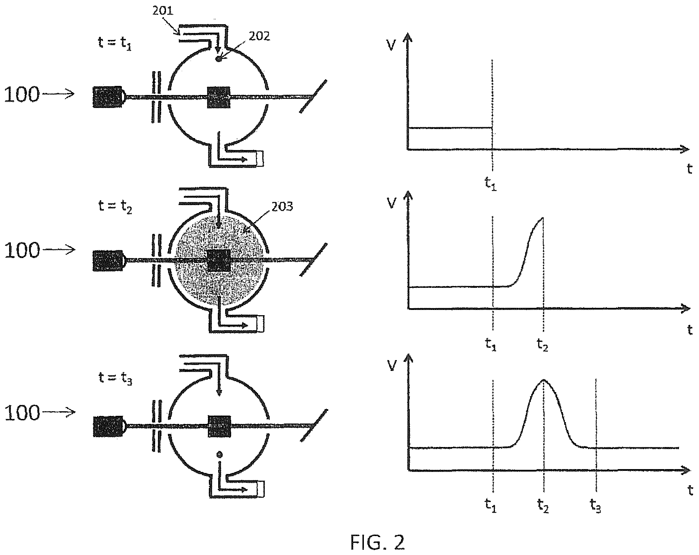

FIG. 2 illustrates the operation of the OPC 100 during detection of a particle at different times in accordance with an embodiment not covered by the claimed invention. Specifically, the left side of FIG. 2 represents the OPC 100 during detection of a particle at time t₁, t₂ and t₃. In FIG. 2, 201 represents the air flow in the device; 202 represents the particle; and 203 represents the light scattered by the particle. The right side of FIG. 2 represents the evolution in time of the signal from the photo-detector.

The sensing technique used by the OPC 100 is described as follows. When no particle crosses the laser beam 102, the signal from the photo-detector 106 stays constant and low as shown at time t₁. When a particle suspended in the aerosol sample enters the laser beam 102, the particle scatters light in all directions. The light is reflected by the surface of the integrating sphere 104. The diffuse reflectivity of the integrating sphere surface 104 and its geometry ensure that the quasi totality of the light scattered by the particle exits the integrating sphere 104 through its ports. Thus, a high percentage of the scattered light exits from the port where the photo-detector 106 is located. The photo-detector 106 transduces this light into a high signal as shown at time t₂. When the particle exits the laser beam, no more light hits the photo-detector 106 and the signal goes back to low as shown at time t₃. The result is that the passage of a particle through the laser beam generates a signal peak in time. The number concentration (e.g., #/cm³) of particles in the aerosol sample is a function of the number of peaks per second (e.g., #/s) and the volume flow rate of the aerosol sample through the device (e.g., cm³/s). As described by the Mie scattering theory, the intensity of the light scattered by the particles is a function of its size and of the incident light intensity. The size of the particles is estimated by measuring the amplitude of the peak. In this way, the size distribution of the particles passing through the device is obtained. From such size distribution, assuming a mass density for the particles, the PM mass concentration (e.g., µg/cm³) can be obtained.

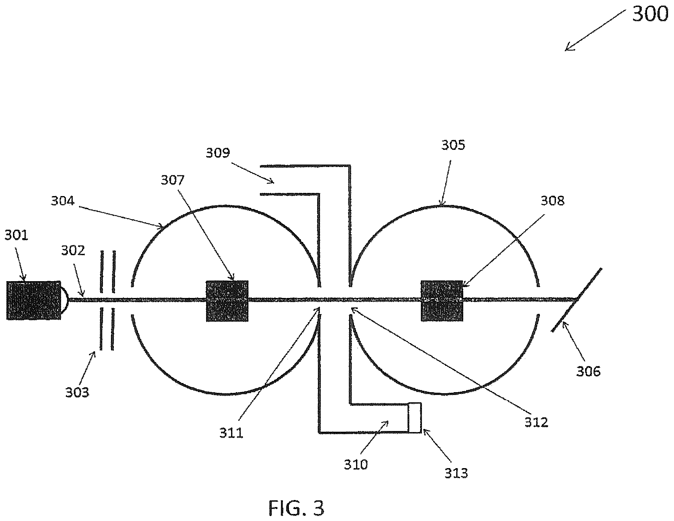

FIG. 3 illustrates an OPC 300 in accordance with an embodiment not covered by the claimed invention. FIG. 3 includes a laser module 301 containing optics to shape a laser beam 302, one or more apertures 303, two integrating spheres 304 and 305, a light stop 306, two photo-detectors 307 and 308, a channel for air inlet 309, a channel for air outlet 310, a fan or blower 313, and two ports 311 and 312 (the ports 311 and 312 are two ports of the integrating spheres). In FIG. 3, one or more components can be separated into more components, combined into fewer components, rearranged, changed, added, and/or removed. In some embodiments, the laser module 301 can be replaced with other suitable light sources. As a non-limiting example, the laser module 301 can be replaced with an LED module, and the laser beam 302 can be replaced with an LED beam. In some embodiments, the integrating spheres 304 and 305 can be modified with non-spherical shapes for easiness of production in the small size range and to provide a better streamlined path for the particles to move through. The embodiment of the OPC 300 is useful when high accuracy in measuring the size distribution of the particles is required. In this embodiment, the laser module 301 focuses the laser beam 302 in the center of two integrating spheres 304 and 305. Before entering the first integrating sphere, the laser beam passes through the one or more apertures 303 that get rid of stray light from the laser module. After exiting the second integrating sphere 305, the laser beam is stopped by the light stop 306. The channels for air inlet 309 and outlet 310 allow the aerosol sample to enter the space between two ports of the two integrating spheres, cross the laser beam and exit. The fan or blower 313 forces the aerosol sample through the channels at a constant rate. The design of the channels does not allow ambient light to enter in the integrating spheres. Two light-to-voltage converters, the photo-detectors 307 and 308, are located in the integrating spheres 304 and 305, respectively. The photo-detectors 307 and 308 can locate at the output ports of the integrating spheres 304 and 305, or any other suitable locations. When no aerosol sample is flowing through the OPC 300, no light (or a minimum amount) from the laser is hitting the walls of the integrating spheres or the photo-detectors.

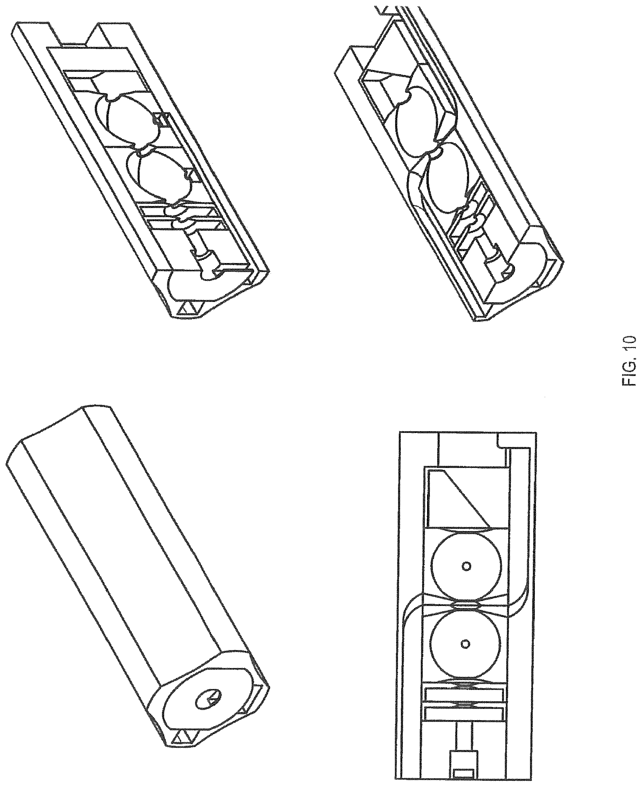

FIG. 10 illustrates a 3D CAD model of the OPC 300 in accordance with an embodiment of the invention. The 3D CAD model shown in FIG. 10 is non-limiting, and other suitable embodiments are within the spirit and scope of the invention.

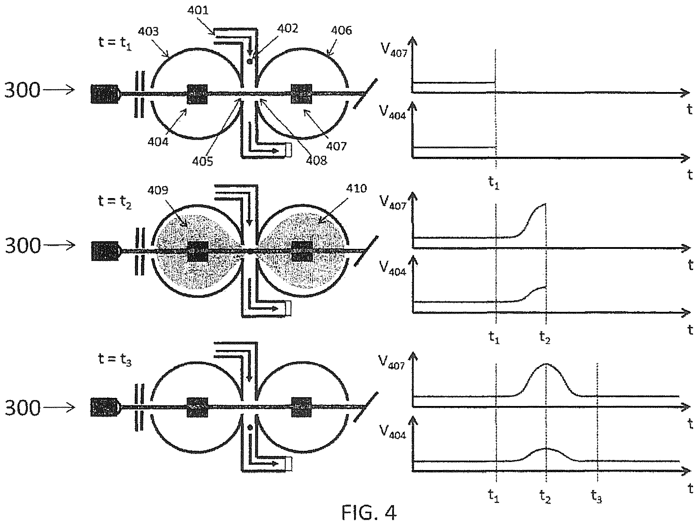

FIG. 4 illustrates the operation of an OPC 300 during detection of a particle at different times in accordance with an embodiment not covered by the claimed invention. Specifically, the left side of FIG. 4 represents the OPC 300 during detection of a particle at time t₁, t₂ and t₃. FIG. 4 relabels the components of the OPC 300. Specifically, 401 represents the air flow in the OPC 300; 402 represents the particle; 403 and 406 represent two integrating spheres; 404 and 407 represent two photo-detectors; 405 and 408 represent two ports of the integrating spheres; and 409 and 410 represent the light scattered by the particle. The right side of FIG. 4 represents the evolution in time of the signal from the photo-detectors 404 and 407.

The sensing technique used by the OPC 300 is described as follows. When no particle crosses the laser beam, the signal from both photo-detector 404 and photo-detector 407 stay constant and low as shown at time t₁. When a particle suspended in the aerosol sample enters the laser beam, it scatters light in all directions. The light can be scattered and enters in the two integrating spheres: the forward scattering lobe 410, which is the light scattered "forwards" with respect to the direction of the laser beam, enters the integrating sphere 406 through the port 408, while the backward scattering lobe 409, which is the light scattered "backwards" with respect to the direction of the laser beam, enters the integrating sphere 403 through the port 405. The diffuse reflectivity of each integrating sphere's surface and its geometry ensure that the quasi totality of the light which enters the sphere exits through its ports. Thus, a high percentage of the scattered light exits from the ports where the photo-detectors are located. The photo-detector 407 receives light from the forward scattering lobe 410, and the photo-detector 404 receives light from the backward scattering lobe 409. As described by Mie scattering theory, forward and backward scattering lobes can have different intensities, and this difference is proportional to particle size and independent of the incident light intensity. The two photo-detectors 404 and 407 output high signals with different amplitude as shown at time t₂. When the particle exits the laser beam, no more light hits the photo-detectors and the signals go back to low as shown at time t₃. The result is that the passage of a particle through the laser beam generates a signal peak in time from photo-detector 404 and a signal peak in time from photo-detector 407. The peaks are simultaneous and have different amplitudes. By taking the ratio of the amplitudes of the two peaks, information about the particle size is obtained independently of the power of the laser hitting the particle.

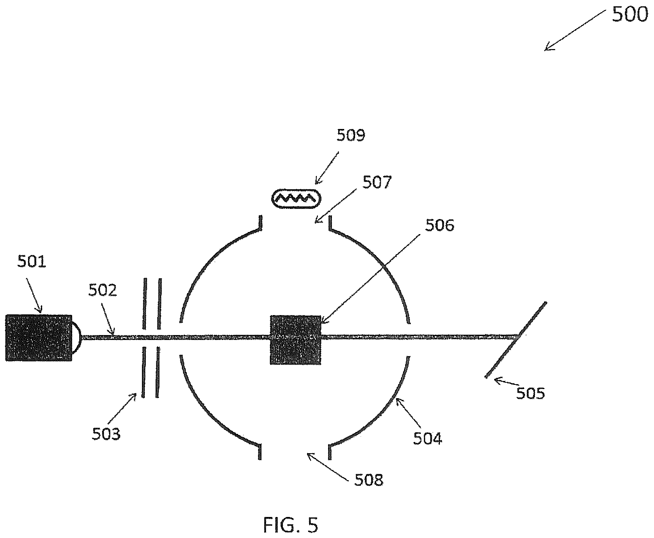

FIG. 5 illustrates an OPC 500 in accordance with an embodiment of the invention. FIG. 5 includes a laser module 501 containing optics to shape a laser beam 502, one or more apertures 503, an integrating sphere 504, a light stop 505, a photo-detector 506, two ports 507 and 508, and a heater 509. The two ports 507 and 508 can allow the aerosol sample to enter the integrating sphere 507 and 508. In some embodiments, no fan or blower is used to create a constant airflow. In FIG. 5, one or more components can be separated into more components, combined into fewer components, rearranged, changed, added, and/or removed. In some embodiments, the laser module 501 can be replaced with other suitable light sources. As a non-limiting example, the laser module 501 can be replaced with an LED module, and the laser beam 502 can be replaced with an LED beam. In some embodiments, the integrating sphere 504 can be modified with a non-spherical shape for easiness of production in the small size range and to provide a better streamlined path for the particles to move through.

In FIG. 5, the laser module 501 focuses the laser beam 502 in the center of the integrating sphere 504. Before entering the integrating sphere 504, the laser beam 502 passes through the one or more apertures 503 that can remove stray light from the laser module 501. After exiting the integrating sphere 504, the laser beam 502 is stopped by the light stop 505. Ports 507 and 508 allow the aerosol sample to enter the integrating sphere 504, cross the laser beam 502 and exit. The heater 509 is placed in front of the port 507. The heater 509 generates a temperature gradient perpendicular to the laser beam 502. A thermophoretic force acts on the particles suspended in the aerosol sample around and in the sphere. This force pushes the particles across the laser beam 502. The photo-detector 506, which is a light-to-voltage converter or any other suitable component or components, is located at one output port of the integrating sphere 504 or at any other suitable locations. When no aerosol sample is present in the OPC 500, no light (or a minimum amount) from the laser is hitting the walls of the integrating sphere 504 or the photo-detector 506. In some embodiments, the wavelength of the laser and the peak detection wavelength of the photo-detector 506 are in the infrared region, reducing the interference from ambient light. In other embodiments, the wavelength of the laser and the peak detection wavelength of the photo-detector are in the visible range, and a structure in front of ports 507 and 508 blocks the ambient light from entering the integrating sphere 504. In some embodiments, a structure in front of ports 507 and 508 prevents external air flow to have an influence on the velocity of the aerosol sample in and around the integrating sphere 504.

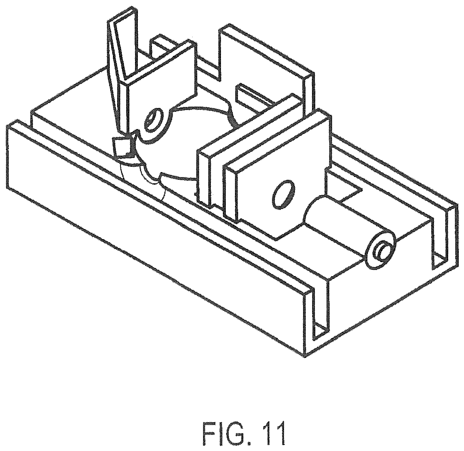

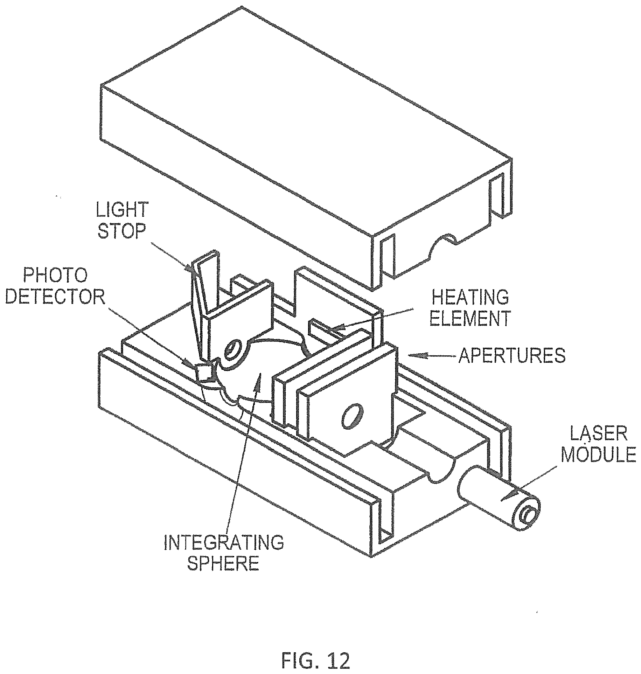

FIG. 11 illustrates a 3D CAD model of the OPC 500 in accordance with an embodiment of the invention. FIG. 12 illustrates an exploded view of FIG. 11 in accordance with an embodiment of the invention. The 3D CAD models shown in FIGS. 11 and 12 are non-limiting, and other suitable embodiments are within the spirit and scope of the invention.

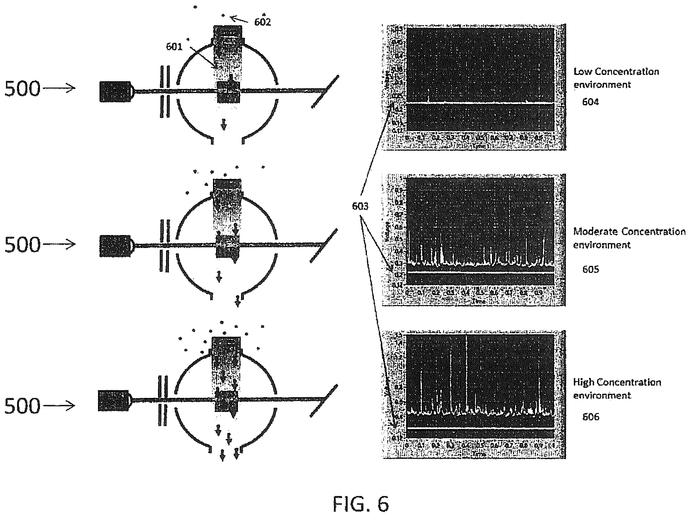

FIG. 6 illustrates the operation of an OPC 500 during detection of particles at different PM concentrations environments in accordance with an embodiment of the invention. In FIG. 6, 601 represents temperature gradient; 602 represents particles; 603 represents the signal base level (e.g., signal value when no aerosol sample is present in the integrating sphere 504); 604 represents the sensor signal under low concentrations; 605 represents the sensor signal under moderate concentrations; and 607 represents the sensor signal under high concentrations. In FIG. 6, the particles 602 move through the integrating sphere due to thermophoretic force caused by the temperature gradient 601. The right of FIG. 6 shows snapshots of sensor signal in increasing (top to bottom) PM concentrations environments.

The sensing technique used by the OPC 500 is described as follows. The particles 602 experience a thermophoretic force due to the temperature gradient 601 created by the heater 509. Particles outside the integrating sphere 504 experience this force and move inside the integrating sphere 504, where they pass through the laser beam 502 and scatter light in all directions. By the virtue of the diffusivity of the integrating sphere 504, a large percentage of scattered light is gathered by the photo-detector 506, which outputs a signal peak. Due to the lack of an air flow forced by a fan or blower, particles take longer to pass through the laser beam compared to what described in the previous embodiments, and thus result in peaks with longer peak widths. The peak width varies with the velocity of the particles moving through the integrating sphere 504. In a low PM concentration environment 604, the signal peaks are distinct and far apart, and can be seen rising from the signal base level as shown in signal 603. However, as concentration increases, the peaks begin to overlap and in turn raise the floor of the signal from the signal base level 603. The signal floor raises with the increase in PM concentration of the surroundings as shown by signals 605 and 606. This observation makes the area under the signal (integral of the signal in time) an important parameter that correlates to the concentration of PM in the air. Agitation of the air outside the integrating sphere 504 can alter the velocity with which the particles pass through the integrating sphere. Average peak widths is used to counter this change such that the output of the sensor (PM concentration) can be made independent of the external movement of the air. Alternatively, the root-mean square errors (RMSE) of the signal are used to counter the effect of the external air agitation. The PM mass concentration is eventually computed as a function of the integral of the signal in time and the average peak widths or the RMSE. In another embodiment, the PM concentration is computed as a function of the integral of the signal in time while some external physical structures will prevent the external airflow from having an effect on the flow inside the integrating sphere.

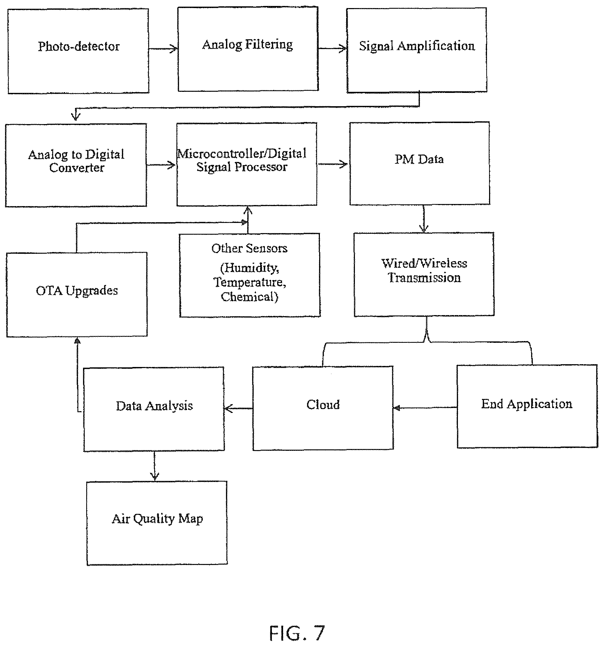

FIG. 7 illustrates a flow chart of the signal processing of an OPC in accordance with an embodiment of the invention. In FIG. 7, one or more steps can be separated into more steps, combined into fewer steps, rearranged, changed, added, and/or removed. First, the signal from the photo-detector is filtered using a bandpass filter. Then, the signal is amplified. The amplified analog signal is converted to a digital signal using an Analog- to-Digital Converter (ADC). The ADC samples the analog signal at a high enough sampling rate to resolve the peaks in time. The Digital Signal Processor (DSP) runs an algorithm to count the peaks per second and thus to obtain the number of particles per second (e.g., #/sec) along with the amplitudes of the peaks. The number concentration (e.g., #/cm3) is obtained by dividing the number of peaks per second (e.g., #/sec) by a calibration constant that is proportional to the volume flow rate of aerosol sample through the sensor (e.g., cm3/sec). This data is used by the DSP to calculates the particle size based on the amplitudes. In one embodiment, only three thresholds are used. One is such that the peaks below it are discarded as electrical noise. The second is such that the peaks below it (and above the first threshold) are counted as particles below 2.5 micrometers in diameter, inclusive (e.g., PM2.5), or any other suitable diameter. The third is such that the peaks below it (and above the first threshold) are counted as particles below 10 micrometers in diameter, inclusive (e.g., PM10), or any other suitable diameter. In other embodiments, more such thresholds are used to distinguish among more particle sizes. From the particle size and assumed mass density of particles passing through the sensor, the PM mass concentration (e.g., µg/cm3) is realized. From the PM mass concentration, the Air Quality Index (AQI) is computed following the guidelines provided by, e.g., World Health Organization (WHO). The number of particles per second, the number concentration, the mass concentration of the aerosol sample flow, and the AQI constitute PM Data. In some embodiments, data from other sensors such as humidity, temperature, and various chemical sensor is fed to the DSP and aggregated to the PM Data. The data from the other sensors can be used to improve the accuracy of the PM Data. In one embodiment, the PM Data is transmitted over Wi-Fi or other wireless communication protocols (e.g., ZigBee, cellular networks, etc.) directly to a cloud service. In another embodiment, the PM Data is transmitted to an end-application such as air purifier, air conditioning system, etc., using a wired communication protocol such as SPI, I2C, etc. The end-application is responsible for uploading the PM Data to the cloud service. In another embodiment, the PM data is transmitted to a smart-device application over Bluetooth Low Energy (BLE). The smart-device application then uploads the data to the cloud service using the wireless capabilities of the smart-device. The aforementioned cloud service collects and analyzes the data from multiple sensors worldwide, generates a dense air quality map and provides information useful for real-time calibration of the already deployed sensors in order to increase their reliability, accuracy, and lifetime. In some embodiments, the calibration data can be applied to the digital signal processor of the sensor via an over the air (OTA) firmware upgrade. Algorithm improvements and new features can be also pushed to all the sensors via OTA firmware upgrades.

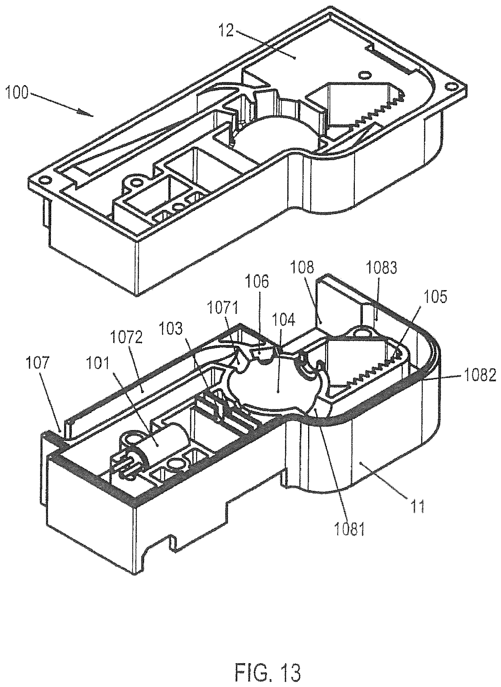

FIG. 13 illustrates an exploded view of an OPC 100 in accordance with an embodiment of the invention. The OPC 100 comprises a housing comprising two halves, i.e. a base protion 11 and a cover portion 12. Both portions 11 and 12 are manufactured by injection molding, and hence are made from plastics. In a quasi-central position of both portions 1 and 12, a hemisphere each is formed by corresponding walls of the respective portions 11 and 12. Each hemisphere is coated with an optically diffuse reflective coating. In response to attaching the base portion 11 to the cover portion 12 or vice versa, the two hemispheres build an integrating sphere 104 into which an aerosol sample, such as environmental air is supplied. Presently, reference sign 107 denotes a channel for the air inlet having a portion 1072 in parallel to a light beam to be introduce later on, while portion 1071 is arranged orthogonal to the portion 1072 and is in communication with the integrating sphere 104, i.e. leads into the integrating sphere 104. This portion 1071 is of tapered shape making any specific nozzles redundant and instead shaping the aerosol stream entering the integrating sphere 104. A laser module 101 is arranged in a corresponding recess in the base portion 11, and will be accepted in a corresponding recess in the cover portion 11 when clamped together. In this embodiment, apertures 103 are not embodied as separate components as is shown in the embodiment of Figures 8 and 9, but are integrated in both base and cover portion 11 and 12 in form of walls having small apertures. A photo detector 106 is arranged close to the ingress of the tapered inlet channel portion 1071, i.e. close to the inlet port into the integrating sphere 104, in order not to be exposed to particles and resulting contamination. A channel of air outlet 108 from the integrating sphere 104 exits the integrating sphere 104 opposite its inlet port 107, and comprises portion 1081 orthogonal to portion 1082, and a portion 1083 in parallel to portion 1081.

The laser beam generated in the laser module 101 passes the apertures 103, crosses the integrating sphere 104, and, after exiting from the integrating sphere 104, meets a light stop 105. The light stop 105 is embodied as a saw-tooth shaped surface of a housing wall that absorbs the incident light.

As can be derived from the arrangement of Fig. 13, the channel for air outlet 108 passes by the wall defining the light stop 105. Hence, air passing the channel for air outlet supports cooling the light stop that is heated in response to absorbing laser light.

It is to be understood that the disclosed subject matter is not limited in its application to the details of construction and to the arrangements of the components set forth in the following description or illustrated in the drawings. The scope of the invention is defined by the claims.

## Claims

1. Optical particle counter (100), including
- a light source,
- an integrating sphere (104),
- a light stop (105),
- a photo-detector (106),
- a channel for air inlet (107), and
- a channel for air outlet (108),
wherein the light source is arranged to focus the light beam in the center of the integrating sphere (104),
wherein the light stop (105) is arranged to stop the light beam after exiting the integrating sphere (104),
wherein the channels for air inlet (107) and outlet (108) are configured to allow an aerosol sample to enter the integrating sphere (104), cross the light beam, and exit,
wherein the photo-detector (106) is arranged to collect light scattered by particles suspended in the aerosol sample when hit by the light beam and to convert the scattered light into an electrical signal,
wherein the optical particle counter (100) is configured to deduce PM concentration in the air,
**characterized in that**
the optical particle counter includes a heater (509), the heater being arranged to exert a convection force on the aerosol sample entering the integrating sphere and hence supporting its transit through the integrating sphere; and
the optical particle counter includes
ports (507, 508) allowing the aerosol sample to enter the integrating sphere (104),
wherein the heater (509) is placed in front of one of the ports (507).

2. Optical particle counter (100) according to claim 1, wherein the light source contains optics to shape a light beam, and
preferably wherein the light source is a laser module (101) containing optics to shape a laser beam (102), or
preferably wherein the light source is a light-emitting diode module containing optics to shape an LED beam.

3. Optical particle counter (100) according to any of the preceding claims,
including one or more apertures (103),
wherein the one or more apertures (103) are arranged to being passed by the light beam before entering the integrating sphere (104), and
preferably wherein the one or more apertures (103) are configured to remove stray light from the light module.

4. Optical particle counter (100) according to any of the preceding claims,
wherein one or more of the channel for air inlet (107) and the channel for air outlet (108) is arranged to enable air or the aerosol passing to cool the light source.

5. Optical particle counter (100) according to any of the preceding claims,
wherein the photo-detector (106) is arranged at a location in the integrating sphere (104) with a distance to the channel for air inlet (107) smaller than to the channel for air outlet (108), and
preferably wherein the location is arranged within an angle of 45° or less relative to an axis defined as line from a center of the integrating sphere (104) to an inlet hole of the channel of air inlet (107) into the integrating sphere (104).

6. Optical particle counter (100) according
to any of the preceding claims, comprising a housing including a receptacle for the light source,
wherein the integrating sphere (104) is defined by interior walls of the housing,
wherein the channel for air inlet (107) is defined by interior walls of the housing,
wherein the channel for air outlet (108) is defined by interior walls of the housing.

7. Optical particle counter (100) according to claim 6,
wherin the housing includes a base portion (11) and a cover portion (12),
wherein the base portion (11) is a single piece,
wherein the cover portion (12) is a single piece,
preferably wherein the base portion (11) and the cover portion (12) represent two halfes of the housing.

8. Optical particle counter (100) according to claim 7,
wherein the channel for air inlet (107) and the channel for air outlet (108) are embodied as recesses in both the base portion (11) and the cover portion (12), and
in particular wherein the recesses contributing to a common channel are symmetric to each other.

9. Optical particle counter (100) according to claim 7 or claim 8,
wherein the two halves are symmetric to each other,
preferably wherein the two halves are identical to each other.

10. Optical particle counter (100) according to any of the preceding claims 7 to 9,
wherein the base portion (11) defines a hemisphere of the integrating sphere (104), and
preferably wherein the surface of the hemisphere is covered by a reflective coating.

11. Optical particle counter (100) according to claim 10,
wherein the cover portion (12) defines the other hemisphere of the integrating sphere (104), and
preferably wherein the surface of the other hemisphere is covered by a reflective coating.

12. Optical particle counter (100) according to any of the preceding claims 6 to 11,
wherein the light stop (105) is embodied as a wall of the housing and comprises a saw-tooth surface, and
wherein the base portion (11) and the cover portion (12) of the housinig are injection molded portions.

13. Optical particle counter (100) according to any of the preceding claims,
wherein the channel for inlet air (107) and the channel for outlet air (108) are designed to prevent ambient light to enter the integrating sphere (104).

14. Optical particle counter (100) according to any of the preceding claims,
wherein a radius of the integrated sphere (104) is 1 cm or less.

## Patentansprüche

1. Optischer Partikelzähler (100), umfassend
- eine Lichtquelle,
- eine Ulbricht-Kugel (104),
- einen Lichtstopp (105),
- einen Photodetektor (106),
- einen Kanal für den Lufteinlass (107), und
- einen Kanal für den Luftauslass (108), worin die Lichtquelle angeordnet ist, den Lichtstrahl im Zentrum der Ulbricht-Kugel (104) zu fokussieren,
worin der Lichtstopp (105) angeordnet ist, den Lichtstrahl nach dem Verlassen der Ulbricht-Kugel (104) aufzuhalten,
worin die Kanäle für den Lufteinlass (107) and den Luftauslass (108) konfiguriert sind, einer Aerosolprobe zu erlauben, die Ulbricht-Kugel (104) zu betreten, den Lichtstrahl zu kreuzen, und auszutreten,
worin der Photodetektor (106) angeordnet ist, Licht einzusammeln, das von Partikeln, die sich in der Aerosolprobe aufhalten, gestreut wird, wenn sie vom Lichtstrahl getroffen werden, und das gestreute Licht in ein elektrisches Signal umzuwandeln,
worin der optische Partikelzähler (100) konfiguriert ist, eine Partikelkonzentration in der Luft zu bestimmmen,
**dadurch gekennzeichnet, dass**
der optische Partikelzähler einen Heizer (509) umfasst, der angeordnet ist, eine Konvektionskraft auf die Aerosolprobe, die die Ulbricht-Kugel betritt, auszuüben und dadurch deren Transit durch die Ulbricht-Kugel zu unterstützen; und
der optische Partikelzähler umfasst Einlässe (507, 508), die der Aerosolprobe erlauben, die Ulbricht-Kugel (104) zu betreten,
worin der Heizer (509) vor einem der Einlässe (507) platziert ist.

2. Optischer Partikelzähler (100) gemäss Anspruch 1,
worin die Lichtquelle eine Optik enthält, um den Lichtstrahl zu formen, und
bevorzugt worin die Lichtquelle ein Lasermodul (101) ist, das eine Optik enthält, um einen Laserstrahl (102) zu formen,
bevorzugt worin die Lichtquelle ein Leuchtdioden-Modul ist, das eine Optik enthält, um einen LED-Strahl zu formen.

3. Optischer Partikelzähler (100) gemäss einem der vorangehenden Ansprüche,
umfassend eine oder mehrere Blenden (103),
worin die eine odere mehrere Blenden (103) angeordnet sind, dass sie vom Lichtstrahl passiert werden, bevor er die Ulbricht-Kugel (104) betritt, und
bevorzugt worin die eine oder mehrere Blenden (103) konfiguriert sind, Streulicht vom Lichtmodul zu entfernen.

4. Optischer Partikelzähler (100) gemäss einem der vorangehenden Ansprüche,
worin einer oder mehrere der Kanäle für Lufeinlass (107) und Luftauslass (108) angeordnet sind, Luft oder der Aerosolprobe zu erlauben, die Lichtquelle zu kühlen.

5. Optischer Partikelzähler (100) gemäss einem der vorangehenden Ansprüche,
worin der Photodetektor (106) an einem Ort in der Ulbricht-Kugel (104) mit einem kleineren Abstand zum Kanal für den Lufteinlass (107) als zum Kanal für den Luftauslass (108) angeordnet ist, und
bevorzugt worin der Ort innerhalb eines Winkels von 45° oder weniger relativ zu einer Achse, die als Linie from Zentrum der Ulbricht-Kugel (104) zu einem Einlassloch des Kanals für den Lufteinlass (107) definiert ist, angeordnet ist.

6. Optischer Partikelzähler (100) gemäss einem der vorangehenden Ansprüche, umfassend
ein Gehäuse mit einem Behälter für die Lichquelle,
worin die Ulbricht-Kugel (104) durch die Innenwände des Gehäuses definiert ist,
worin der Kanal für den Lufteinlass (107) durch die Innenwände des Gehäuses definiert ist,
worin der Kanal für den Luftauslass (108) durch die Innenwände des Gehäuses definiert ist.

7. Optischer Partikelzähler (100) gemäss Anspruch 6,
worin das Gehäuse ein Basisteil (11) und ein Deckteil (12) umfasst,
worin das Deckteil (12) ein einziges Stück ist,
bevorzugt worin das Basisteil (11) und das Deckteil (12) zwei Hälften des Gehäuses darstellen.

8. Optischer Partikelzähler (100) gemäss Anspruch 7,
Worin der Kanal für den Lufteinlass (107) und der Kanal für den Luftauslass (108) als Aussparungen sowohl im Basisteil (11) als auch im Deckteil (12) ausgeformt sind, und
insbesondere worin die Aussparungen, die zu einem gemeinsamen Kanal beitragen, symmetrisch zueinander sind.

9. Optischer Partikelzähler (100) gemäss Anspruch 7 oder Anspruch 8,
worin die beiden Hälften symmetrisch zueinander sind,
bevorzugt worin die beiden Hälften identisch sind.

10. Optischer Partikelzähler (100) gemäss einem der Ansprüch 7 bis 9,
Worin das Basisteil (11) eine Halbkugel der Ulbricht-Kugel (104) definiert, und
bevorzugt worin die Oberfläche der Halbkugel mit einer reflektierenden Schicht bedeckt ist.

11. Optischer Partikelzähler (100) gemäss Anspruch 10,
worin das Deckteil (12) die andere Halbkugel der Ulbricht-Kugel (104) definiert, und
bevorzugt worin die Oberfläche der anderen Halbkugel mit einer reflektierenden Schicht bedeckt ist.

12. Optischer Partikelzähler (100) gemäss einem der vorangehenden Ansprüche 6 bis 11,
worin der Lichtstopp (105) als Wand des Gehäuses ausgeformt ist und eine Sägezahn-Oberfläche umfass, und
worin das Basisteil (11) und das Deckteil (12) des Gehäuses Spritzgussteile sind.

13. Optischer Partikelzähler (100) gemäss einem der vorangehenden Ansprüche,
worin der Kanal für den Lufteinlass (107) und der Kanal für den Luftauslass (108) gestaltet sind, um zu verhindern, dass Umgebungslicht in die Ulbricht-Kugel (104) eintritt.

14. Optischer Partikelzähler (100) gemäss einem der vorangehenden Ansprüche,
worin ein Radius der Ulbricht-Kugel (104) 1 cm oder weniger beträgt.

## Revendications

1. Compteur optique de particules (100), comprenant
- une source de lumière,
- une sphère d'intégration (104),
- un arrêt de lumière (105),
- un photodétecteur (106),
- un canal pour l'entrée d'air (107), et
- un canal pour la sortie d'air (108),
dans lequel la source de lumière est agencée pour focaliser le faisceau de lumière au centre de la sphère d'intégration (104),
dans lequel l'arrêt de lumière (105) est agencé pour arrêter le faisceau de lumière après la sortie de la sphère d'intégration (104),
dans lequel les canaux pour l'entrée d'air (107) et pour la sortie d'air (108) sont configurés pour permettre à un échantillon d'aérosol d'entrer dans la sphère d'intégration (104), de traverser le faisceau de lumière et de sortir,
dans lequel le photodétecteur (106) est agencé pour recueillir la lumière diffusée par les particules suspendues dans l'échantillon d'aérosol lorsqu'elles sont frappées par le faisceau de lumière et pour convertir la lumière diffusée en un signal électrique,
dans lequel le compteur optique de particules (100) est configuré pour déduire la concentration PM dans l'air,
**caractérisé en ce que**
le compteur optique de particules comprend un dispositif de chauffage (509), le dispositif de chauffage étant agencé pour exercer une force de convection sur l'échantillon d'aérosol entrant dans la sphère d'intégration et favorisant ainsi son transit à travers la sphère d'intégration ; et
le compteur optique de particules comprend des orifices (507, 508) permettant à l'échantillon d'aérosol de pénétrer dans la sphère d'intégration (104),
dans lequel le dispositif de chauffage (509) est placé en face de l'un des orifices (507).

2. Compteur optique de particules (100) selon la revendication 1, dans lequel la source de lumière contient des éléments optiques pour mettre en forme un faisceau de lumière, et
de préférence, dans lequel la source de lumière est un module laser (101) contenant des éléments optiques pour former un faisceau laser (102), ou
de préférence, dans lequel la source de lumière est un module de diodes électroluminescentes contenant des éléments optiques pour former un faisceau de DEL.

3. Compteur optique de particules (100) selon l'une des revendications précédentes,
comprenant une ou plusieurs ouvertures (103), dans lequel la ou les ouvertures (103) sont agencées pour être traversées par le faisceau de lumière avant de pénétrer dans la sphère d'intégration (104), et
de préférence, dans lequel l'une ou les plusieurs ouvertures (103) sont configurées pour éliminer la lumière parasite du module de lumière.

4. Compteur optique de particules (100) selon l'une des revendications précédentes,
dans lequel un ou plusieurs du canal pour l'entrée d'air (107) et du canal pour la sortie d'air (108) sont agencés pour permettre le passage de l'air ou de l'aérosol pour refroidir la source de lumière.

5. Compteur optique de particules (100) selon l'une des revendications précédentes,
dans lequel le photodétecteur (106) est disposé à un emplacement de la sphère d'intégration (104) avec une distance au canal pour l'entrée d'air (107) inférieure à celle du canal pour la sortie d'air (108), et
de préférence dans lequel l'emplacement est disposé dans un angle de 45° ou moins par rapport à un axe défini comme une ligne allant d'un centre de la sphère d'intégration (104) à un trou d'entrée du canal pour l'entrée d'air (107) dans la sphère d'intégration (104) .

6. Compteur optique de particules (100) selon l'une des revendications précédentes, comportant
un boîtier comprenant un réceptacle pour la source de lumière,
dans lequel la sphère d'intégration (104) est définie par des parois intérieures du boîtier,
dans lequel le canal pour l'entrée d'air (107) est défini par des parois intérieures du boîtier,
dans lequel le canal pour la sortie d'air (108) est défini par des parois intérieures du boîtier.

7. Compteur optique de particules (100) selon la revendication 6,
dans lequel le boîtier comprend une partie de base (11) et une partie de couvercle (12),
dans lequel la partie de base (11) est une pièce individuelle,
dans lequel la partie de couvercle (12) est une pièce individuelle,
de préférence dans lequel la partie de base (11) et la partie de couvercle (12) représentent deux moitiés du boîtier.

8. Compteur optique de particules (100) selon la revendication 7,
dans lequel le canal pour l'entrée d'air (107) et le canal pour la sortie d'air (108) sont réalisés sous forme d'évidements à la fois dans la partie de base (11) et la partie de couvercle (12), et
en particulier, dans lequel les évidements contribuant à un canal commun sont symétriques les uns par rapport aux autres.

9. Compteur optique de particules (100) selon la revendication 7 ou la revendication 8,
dans lequel les deux moitiés sont symétriques l'une par rapport à l'autre,
de préférence dans lequel les deux moitiés sont identiques l'une à l'autre.

10. Compteur optique de particules (100) selon l'une des revendications précédentes 7 à 9,
dans lequel la partie de base (11) définit un hémisphère de la sphère d'intégration (104), et
de préférence dans lequel la surface de l'hémisphère est recouverte d'un revêtement réfléchissant.

11. Compteur optique de particules (100) selon la revendication 10,
dans lequel la partie de couvercle (12) définit l'autre hémisphère de la sphère d'intégration (104), et
de préférence, dans lequel la surface de l'autre hémisphère est recouverte d'un revêtement réfléchissant.

12. Compteur optique de particules (100) selon l'une des revendications précédentes 6 à 11,
dans lequel l'arrêt de lumière (105) est réalisé sous la forme d'une paroi du boîtier et comprend une surface en dents de scie, et
dans lequel la partie de base (11) et la partie de couvercle (12) du boîtier sont des parties moulées par injection.

13. Compteur optique de particules (100) selon l'une des revendications précédentes,
dans lequel le canal pour l'entrée d'air (107) et le canal pour la sortie d'air (108) sont conçus pour empêcher la lumière ambiante de pénétrer dans la sphère d'intégration (104).

14. Compteur optique de particules (100) selon l'une des revendications précédentes,
dans lequel un rayon de la sphère intégrée (104) est inférieur ou égal à 1 cm.
